# EUROPÄISCHE PATENTSCHRIFT

(11) **EP 1 941 331 B1**
(45) Veröffentlichungstag und Bekanntmachung des Hinweises auf die Patenterteilung: **04.04.2012**
(21) Anmeldenummer: 06807358.4
(22) Anmeldetag: 17.10.2006
(51) Int. Cl.: G05B 19/05

(54) **VORRICHTUNG ZUM BETREIBEN EINER PROZESSANLAGE**
APPARATUS FOR OPERATING A PROCESS INSTALLATION
DISPOSITIF D EXPLOITATION D UNE INSTALLATION DE PROCESSUS

(30) Priorität: 27.10.2005 DE 102005051769
(43) Veröffentlichungstag der Anmeldung: 09.07.2008
(73) Patentinhaber: Endress+Hauser Flowtec AG, 4153 Reinach (CH)
(72) Erfinder: BUDMIGER, Thomas, CH-4107 Ettingen (CH)
(74) Vertreter: Andres, Angelika Maria
(86) Internationale Anmeldenummer: PCT/EP2006/067516
(87) Internationale Veröffentlichungsnummer: WO 2007/048741

(56) Entgegenhaltungen:
- GB-A- 2 403 043
- US-A1- 2002 013 629

## Beschreibung

Die Erfindung betrifft eine Vorrichtung zum Betreiben einer Prozessanlage mit einer Leitwarte und zumindest einem Feldgerät, das zumindest eine Prozess-größe bestimmt oder überwacht. Ein Feldgerät ist im Normalfall eine intelligente Einheit, bestehend aus einem Sensor, der die jeweilige Prozessgröße detektiert, und einem integrierten oder räumlich abgesetzten Messumformer, der Information über die Prozessgröße bereitstellt.

In der Prozessautomatisierungstechnik werden vielfach Feldgeräte eingesetzt, die zur Erfassung und/oder Beeinflussung von Prozessgrößen dienen. Als Beispiele für derartige Feldgeräte sind Füllstandsmessgeräte, Massedurch-flussmessgeräte, Druck-und Temperaturmessgeräte, pH-Redox-Messgeräte oder Leitfähigkeitsmessgeräte zu nennen, die die entsprechenden Prozess-größen: Füllstand, Durchfluss, Druck, Temperatur, pH-Wert, Leitfähigkeit, usw. erfassen. Felgeräte für die vielfältigsten Anwendungen werden von der Anmelderin hergestellt und vertrieben.

Häufig sind Feldgeräte über einen sog. Feldbus mit einer übergeordneten Einheit, sprich einer Leitwarte oder einem Prozessleitsystem verbunden. Die übergeordnete Leitwarte dient zur Prozessvisualisierung, zur Prozess-überwachung, zur Prozesssteuerung sowie zur Bedienung der an den Feldbus angeschlossenen Feldgeräte. Beispiele für derartige Feldbusse sind: CAN, CAN-OPEN, HART, Profibus PA, Profibus DP, Profibus FMS, Foundation Fieldbus.

Mit Hilfe eines Feldbusses ist es nicht nur möglich, Messwerte von einem Feldgerät zu der zentralen Steuereinheit bzw. zur Leitwarte zu übertragen. Neben der reinen Messwertübertragung erlauben Feldgeräte auch die Übertragung von verschiedenen im Feldgerät abgespeicherten Informationen, wie z.B. Parameter-Informationen (Nullpunkt, Messwertspanne, etc.), Messkurven und Diagnose-Informationen. Weiterhin werden die Feldgeräte von der Leitwarte fernbedient. Hierfür sind spezielle Hardware- und Softwarekomponenten sowohl im Feldgerät wie auch in der Leitwarte notwendig.

In der Prozessleittechnik geht die Entwicklung in die Richtung, immer mehr Funktionalitäten, die direkt oder indirekt von der eigentlichen Mess- und Überwachungsaufgabe des Feldgerätes abgeleitet sind, in das Feldgerät zu implementieren; insbesondere soll ein Feldgerät in der Lage sein, alle speziellen Anforderungen, die ein Kunde hat, abzudecken. Ausgeführt werden diese vielfältigen Funktionalitäten von zumindest einem im Feldgerät angeordneten Mikroprozessor. Dieser Mikroprozessor wird natürlich auch weiterhin für seine ursprüngliche Bestimmung, d.h. für das Bereitstellen von Information über die zu bestimmende und überwachende Prozessgröße, benötigt.

Der Zuwachs an in das Feldgerät hineinverlagerter Funktionalität bedeutet einerseits auf der Seite der Gerätehersteller einen erhöhten Herstellungs- und Entwicklungsaufwand; auf der Seite der Anwender ist damit aber andererseits ein erhöhter Handhabungsaufwand verbunden. Für beide Seiten entstehen folglich höhere Kosten. Insbesondere ist der Schulungsaufwand und der Umfang der Handbücher ganz erheblich - wobei zu bemerken ist, dass ein einzelner Anwender in der Regel üblicherweise für seine spezielle Anwendung nur einen Bruchteil der verfügbaren Funktionalitäten eines Feldgeräts benötigt.
Dokument GB 2403043 beschreibt Verfahren, Geräte und Erzeugnisse für die Konfigurierung eines Kommunikationsnetzwerks, das mit einer Vielzahl von drahtlos versorgten Feldvorrichtungen in Verbindung steht. Die dort offengelegten Verfahren, Geräte und Erzeugnisse können Identifikationsinformation im Zusammenhang mit einer drahtlos versorgten Feldvorrichtung mit Information einer Konfigurationsdatenbank vergleichen. Die der drahtlos versorgten Feldvorrichtung zugehörige Konfiguradonsinformation kann auf Basis des Vergleichs der Identifikationsinformation mit der Information der Konfigurationsdatenbank abgerufen werden. Die abgerufene Konfigurationsinformation wird über mindestens einen drahtlosen Kommunikationslink an die drahtlos versorgte Feldvorrichtung gesendet, um die drahtlos versorgte Feldvorrichtung zu konfigurieren.

Aus der DE 103 25 277 A1 ist ein variables Feldgerät für die Prozessleit-technik bekannt geworden, das zwecks Datenübertragung an ein externes Kommünikationsmedium angeschlossen ist und dessen Funktionalitäten anwendungsspezifisch anpassbar sind. Während das Feldgerät nur noch die Grundfunktionen, z.B. die Messwerterzeugung bereitstellt, werden die anwendungsspezifischen Funktionalitäten, wie z.B. die Bereitstellung von Frequenz-/Impulsausgängen durch separate Funktionseinheiten realisiert, wobei die Feldgeräte und die separaten Funktionseinheiten Daten über das Kommunikationsmedium austauschen. Bei dem Kommunikationsmedium handelt es sich z.B. um eine Zweidrahtleitung. Bei der Funktionseinheit handelt es sich beispielsweise um ein extern anschließbares Bedientool.

Durch die aus dem Stand der Technik bekannt gewordene Lösung ist das Feldgerät sehr variabel und anwendungsspezifisch anpassbar. Insbesondere weist es keine nicht benötigten Funktionalitäten auf. Auch die Bedienung eines derartigen Feldgerätes ist äußerst einfach, da es nur die vom Anwender benötigten Funktionen aufweist. Weiterhin ist die Transparenz der Messwert-weiterverarbeitung für den Anwender offensichtlich. Das Feldgerät liefert einen Messwert, der in den entsprechenden Funktionseinheiten weiterver-arbeitet wird. Durch den einfachen Aufbau ist das variable Feldgerät sehr kostengünstig im Hinblick auf seine Herstellung und Handhabung.

Der Erfindung liegt die Aufgabe zugrunde, eine Vorrichtung vorzuschlagen, bei der einem Feldgerät automatisch nur die Information zur Verfügung gestellt wird, die es für seine jeweilige Anwendung benötigt.

Die Aufgabe wird dadurch gelöst, dass jedes Feldgerät einen Programm-/Datenspeicher aufweist, in dem eine Boot-Loader-Software fest implementiert ist, wobei die Boot-Loader-Software die Kommunikation des Feldgeräts mit der Leitwarte ermöglicht, dass jeweils eine Übertragungsstrecke vorgesehen ist, über die die Leitwarte und das Feldgerät bzw. die Feldgeräte während des Betriebs miteinander kommunizieren, dass jedes Feldgerät im Fall einer Inbetriebnahme des Feldgeräts über die Übertragungsstrecke eine geräte-spezifische Information an die Leitwarte überträgt, dass die Leitwarte dem Feldgerät nach Empfang der gerätespezifischen Information eine auf seine jeweilige Anwendung abgestimmte anwendungs- und/oder gerätespezifische Mess-/Regel-/Auswertesoftware überträgt, welche das Feldgerät in einem ihm zuge-ordneten Datenspeicher abspeichert, und dass das Feldgerät entsprechend der ihm während des Betriebs zur Verfügung stehenden anwendungs- und/oder gerätespezifische Mess-/Regel-/Auswertesoftware Information über die Prozessgröße zur Verfügung stellt.

Die erfindungsgemäße Vorrichtung zeichnet sich dadurch aus, dass sie einerseits kostengünstig ist; andererseits ermöglicht die Erfindung eine wesentliche Vereinfachung im Rahmen von Wartungsarbeiten an der Prozessanlage. Soll in dem Feldgerät beispielsweise eine neue Software zur Bereitstellung der Messdaten oder für eine neue anwendungsspezifische Applikation implementiert werden, so geschieht dies automatisch beim Hochfahren bzw. bei der Inbetriebnahme des Feldgeräts. Gleiches ist auch vorgesehen für das Einspielen von aktuellen Kalibrier- oder Parametrier daten, die von der übergeordneten Leitwarte automatisch bei Aufnahme des Messbetriebs des entsprechenden Feldgeräts an das Feldgerät übertragen werden. Die erfindungsgemäße Vorrichtung sieht weiterhin vor, dass es sich bei dem Programmspeicher für die Boot-Loader-Software um einen nicht- flüchtigen Speicher handelt, während der Programm-/Daten-speicher als flüchtiger Speicher ausgebildet ist.

Gemäß einer vorteilhaften Weiterbildung der erfindungsgemäßen Vorrichtung ist die Übertragungsstrecke als digitale Datenleitung ausgebildet. Alternativ ist die Möglichkeit vorgesehen, dass es sich bei der Übertragungsstrecke um eine FunkVerbindung handelt.

Darüber hinaus wird - wie bereits zuvor erwähnt - vorgeschlagen, dass es sich bei der anwendungs- und/oder gerätespezifische Mess-/Regel-/Auswertesoftware um Kalibrierdaten und/oder Parametrierdaten handelt.

Gemäß einer vorteilhaften Ausgestaltung der erfindungsgemäßen Vorrichtung überträgt die Leitwarte über die Übertragungsstrecke bei Bedarf ein Kommando, welches die Inbetriebnahme des Feldgeräts automatisch startet, d.h. das Feldgerät wird zwangsweise zurückgesetzt und anschließend neu gestartet.

Die Erfindung wird anhand der nachfolgenden Figuren näher erläutert. Es zeigt:

Fig. 1: eine schematische Darstellung einer ersten Ausführungsform der erfindungsgemäßen Vorrichtung und

Fig. 2: eine schematische Darstellung einer zweiten Ausführungsform der erfindungsgemäßen Vorrichtung.

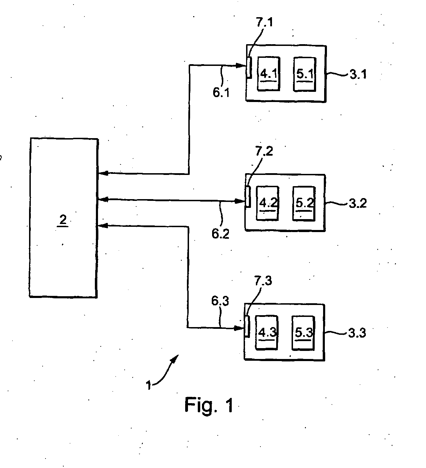

In Fig. 1 ist eine schematische Darstellung einer ersten Ausführungsform der erfindungsgemäßen Vorrichtung gezeigt. Die Leitwarte 2 ist mit den Feld-geräten 3.1, 3.2, 3.3 über die Übertragungsstrecken 6.1, 6.2, 6.3 verbunden. Über die Übertragungsstrecken 6.1, 6.2, 6.3 erfolgt der Datenaustausch zwischen der Leitwarte 2 und den Feldgeräten 3.1, 3.2, 3.3. Im dargestellten Fall erfolgt die Kommunikation bevorzugt über Funk. Entsprechende Funk-Schnittstellen 7.1, 7.2, 7.3 sind an den Feldgeräten 3.1, 3.2, 3.3 und an der Leitwarte 2 vorgesehen.

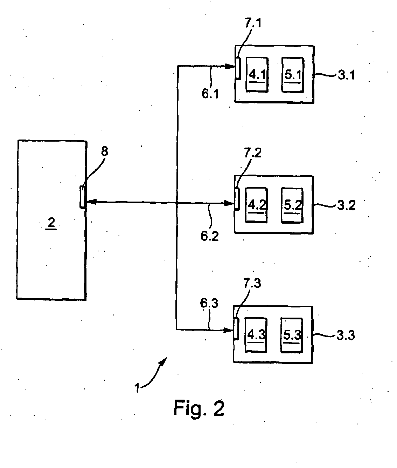

Bei der in Fig. 2 gezeigten Ausgestaltung der erfindungsgemäßen Vorrichtung kommunizieren die Feldgeräte 3.1, 3.2, 3.3 über verdrahtete digitale Datenleitungen bzw. über einen Feldbus, der nach einem der folgenden Protokolle arbeitet: CAN, CAN-OPEN, HART, Profibus PA, Profibus DP, Profibus, FMS, Foundation Fieldbus.

Jedes Feldgerät 3.1, 3.2, 3.3 weist einen Programmspeicher 4.1, 4.2, 4.3 und einen Datenspeicher 5.1, 5.2, 5.3 auf, wobei in jedem Programmspeicher 4.1, 4.2, 4.3 eine Boot-Loader-Software fest implementiert ist, die die Kommuni-kation des Feldgeräts 3.1, 3.2, 3.3 mit der Leitwarte ermöglicht. Im Fall einer Inbetriebnahme des Feldgeräts 3.1, 3.2, 3.3 überträgt das Feldgerät 3.1, 3.2, 3.3 über die Übertragungsstrecke 6.1, 6.2, 6.3 eine gerätespezifische Information bzw. eine Kennung an die Leitwarte 2. Im Gegenzug überträgt die Leitwarte 2 dem Feldgerät 3.1, 3.2, 3.3 nach Empfang der gerätespezifischen Information eine auf seine jeweilige Anwendung abgestimmte anwendungs- und/oder gerätespezifische Mess-/Regel-/Auswerte-Software. Diese speichert das Feldgerät 3.1, 3.2, 3.3 temporär in dem ihm zugeordneten Datenspeicher 5.1, 5.2. 5.3. Während des nachfolgenden Betriebs arbeitet das Feldgerät 3.1, 3.2, 3.3 auf der Grundlage der speziell auf seine Aufgabe abgestimmten, anwendungs- und/ oder gerätespezifischen Mess-/Regel-/Auswertesoftware und stellt Information über die von ihm gemessene bzw. überwachte Prozessgröße zur Verfügung. Da das Feldgerät 3.1, 3.2, 3.3 bei jeder Inbetriebnahme auto-matisch die aktuelle auf seine jeweilige Messaufgabe optimal abgestimmte - quasi maßgeschneiderte Mess-/Regel-/ Auswerte-software erhält, arbeitet die erfindungsgemäße Vorrichtung höchst effektiv.

Wie bereits an vorhergehender Stelle erwähnt, ist weiterhin vorgesehen, dass die Leitwarte 2 über die Übertragungsstrecke 6; 6.1, 6.2, 6.3 ein Kommando an ein Feldgerät 3.1, 3.2, 3.3 schickt, welches das Feldgerät 3.1, 3.2, 3.3 bei Bedarf, z.B. nachdem der Leitwarte 2 ein Update der Mess-/Regel-/Auswerte-software übermittelt wurde, zwangsweise zurückgesetzt und anschließend neu gestartet wird. Die Mess-/Regel-/Auswertesoftware wird der Leitwarte 2 über ein Bedientool eingespeist; möglich ist jedoch auch beispielsweise ein Einspielen des Updates über Internet.

**Bezugszeichenliste**

1 erfindungsgemäße Vorrichtung

2 Leitwarte

3.1 Feldgerät

3.2 Feldgerät

3.3 Feldgerät

4.1 Programmspeicher

4.2 Programmspeicher

4.3 Programmspeicher

5.1 Datenspeicher

5.2 Datenspeicher

5.3 Datenspeicher

6.1 Übertragungsstrecke

6.2 Übertragungsstrecke

6.3 Übertragungsstrecke

7.1 Schnittstelle

7.2 Schnittstelle

7.3 Schnittstelle

8 Schnittstelle

## Patentansprüche

1. Vorrichtung zum Betreiben einer Prozessanlage mit einer Leitwarte (2) und zumindest einem Feldgerät (3.1, 3.2, 3.3), das zumindest eine Prozessgröße bestimmt oder überwacht,
wobei jedes Feldgerät einen nicht-flüchtigen Programmspeicher (4; 4.1, 4.2, 4.3) aufweist, in dem eine Boot-Loader Software fest implementiert ist,
wobei die Boot-Loader-Software die Kommunikation des Feldgeräts (3.1, 3.2, 3.3) mit der Leitwarte ermöglicht,
wobei eine Übertragungsstrecke (6; 6.1, 6.2, 6.3) vorgesehen ist, über die die Leitwarte (2) und das Feldgerät bzw. die Feldgeräte (3.1, 3.2, 3.3) während des Betriebs miteinander kommunizieren,
wobei jedes Feldgerät (3.1, 3.2, 3.3) im Fall einer Inbetriebnahme des Feldgeräts (3.1, 3.2, 3.3) über die Übertragungsstrecke (6.1, 6.2, 6,3) eine geräte-spezifische Information an die Leitwerte (2) überträgt,
wobei die Leitwarte (2) dem Feldgerät (3.1, 3.2, 3.3) nach Empfang der gerätespezifischen Information eine auf seine jeweilige Anwendung abgestimmte anwendungs- und/oder gerätespezifische Messsoftware, Regelsoftware oder Auswertesoftware überträgt, bei der es sich um eine neue Software zur Bereitstellung von Messdaten oder für eine neue anwendungspezifische Applikation handelt,
welche das Feldgerät (3.1, 3.2, 3.3) in einem ihm zugeordneten flüchtigen Programmspeicher oder flüchtigen Datenspeicher (5.1, 5.2, 5.3) abspeichert, und welche neue Software bei der Inbetriebnahme des Feldgerätes impementiert wird,
wobei das Feldgerät (3.1, 3.2, 3.3) entsprechend der ihm während des Betriebs zur Verfügung stehenden anwendungs- und/oder gerätespezifische Messsoftware, Regelsoftware oderAuswertesoftware Information über die Prozessgröße zur Verfügung stellt.

2. Vorrichtung nach Anspruch 1,
**dadurch gekennzeichnet,**
**dass** die Übertragungsstrecke (6; 6.1, 6.2, 6.3) als digitale Datenleitung ausgebildet ist.

3. Vorrichtung nach Anspruch 1,
**dadurch gekennzeichnet,**
**dass** es sich bei der Übertragungsstrecke (6; 6,1, 6.2, 6.3) um eine Funkverbindung handelt.

4. Vorrichtung nach Anspruch 1,
**dadurch gekennzeichnet,**
**dass** es sich bei der anwendungs- und/oder gerätespezifische Messsoftware, Regelsoftware oder Auswerte software
um Kalibrierdaten und/oder Parametrierdaten handelt.

5. Vorrichtung nach Anspruch 1,
**dadurch gekennzeichnet,**
**dass** die Leitwarte (2) über die Übertragungsstrecke (6; 6.1, 6.2, 6.3) ein Kommando überträgt, mit dem die Inbetriebnahme des Feldgeräts (3.1, 3.2, 3.3) gestartet wird.

## Claims

1. Unit to operate a process system with a control room (2) and at least one field device (3.1, 3.2, 3.3), which determines or monitors at least one process variable,
wherein every field device has a non-volatile program memory (4, 4.1, 4.2, 4.3) in which a boot loader software is permanently implemented,
wherein the boot loader software enables the field device (3.1, 3.2, 3.3) to communicate with the control room (2),
wherein a transmission path (6, 6.1, 6.2, 6.3) is provided via which the control room (2) and the field device or field devices (3.1, 3.2, 3.3) communicate with one another during operation,
wherein every field device (3.1, 3.2, 3.3) transmits device-specific information to the control room (2) via the transmission path (6.1, 6.2, 6.3) if the field device (3.1, 3.2, 3.3) is commissioned,
wherein, on receipt of the device-specific information, the control room (2) sends the field device (3.1, 3.2, 3.3) application-specific and/or device-specific measurement software, control software or evaluation software, which is adapted to the specific application, said software being new software for the provision of measurement data or for a new application-specific application, which the field device (3.1, 3.2, 3.3) saves in a volatile program memory or data memory (5.1, 5.2, 5.3) assigned to the field device, and said new software is implemented when the field device (3.1, 3.2, 3.3) is commissioned, wherein the field device (3.1, 3.2, 3.3) makes information about the process variable available in line with the application-specific and/or device-specific measuring software, control software or evaluation software made available to it during operation.

2. Unit as claimed in Claim 1,
**characterized in that**
the transmission path (6, 6.1, 6.2, 6.3) is designed as a digital data line.

3. Unit as claimed in Claim 1,
**characterized in that**
the transmission path (6, 6.1, 6.2, 6.3) is a wireless connection.

4. Unit as claimed in Claim 1,
**characterized in that**
the application-specific and/or device-specific measuring software, control software or evaluation software constitutes calibration data and/or configuration data.

5. Unit as claimed in Claim 1,
**characterized in that**
the control room (2) transmits a command via the transmission path (6, 6.1, 6.2, 6.3) with which the commissioning of the field device (3.1, 3.2, 3.3) is started.

## Revendications

1. Dispositif destiné à l'exploitation d'une installation process avec un poste de supervision (2) et au moins un appareil de terrain (3.1, 3.2, 3.3), qui détermine ou surveille au moins une grandeur process,
chacun des appareils de terrain comportant une mémoire de programmes (4, 4.1, 4.2, 4.3) non volatile, dans laquelle est implémenté un logiciel "bootloader" (chargeur d'amorçage),
le logiciel "bootloader" permettant la communication de l'appareil de terrain (3.1, 3.2, 3.3) avec le poste de supervision (2),
une ligne de transmission (6, 6.1, 6.2, 6.3) étant prévue, par l'intermédiaire de laquelle le poste de supervision (2) et l'appareil de terrain ou les appareils de terrain (3.1, 3.2, 3.3) communiquent entre eux pendant le fonctionnement,
chaque appareil de terrain (3.1, 3.2, 3.3) transmettant, dans le cas d'une mise en service de l'appareil de terrain (3.1, 3.2, 3.3) une information spécifique à l'appareil en direction du poste de supervision (2), par l'intermédiaire de la ligne de transmission (6, 6.1, 6.2, 6.3),
le poste de supervision (2) transmettant à l'appareil de terrain (3.1, 3.2, 3.3), après la réception de l'information spécifique à l'appareil, un logiciel de mesure, un logiciel de régulation ou un logiciel d'exploitation spécifique à l'application et/ou à l'appareil, adapté à son application respective, pour lequel il peut s'agir d'un nouveau logiciel destiné à la mise à disposition de données de mesure ou pour une nouvelle application spécifique, laquelle enregistre l'appareil de terrain (3.1, 3.2, 3.3) dans une mémoire de programmes ou une mémoire de données (5.1, 5.2, 5.3), et lequel nouveau logiciel est implémenté lors de la mise en service de l'appareil de terrain,
l'appareil de terrain (3.1, 3.2, 3.3) mettant à disposition l'information sur la grandeur process conformément au logiciel de mesure, logiciel de régulation ou logiciel d'exploitation spécifique à l'application et/ou à l'appareil, qui est mis à sa disposition pendant le fonctionnement.

2. Dispositif selon la revendication 1,
**caractérisé en ce**
**que** la ligne de transmission (6, 6.1, 6.2, 6.3) est constituée d'une ligne de données numérique.

3. Dispositif selon la revendication 1,
**caractérisé en ce**
**que**, concernant la ligne de transmission (6, 6.1, 6.2, 6.3), il s'agit d'une liaison sans fil.

4. Dispositif selon la revendication 1,
**caractérisé en ce**
**que**, concernant le logiciel de mesure, le logiciel de régulation ou le logiciel d'exploitation spécifique à l'application et/ou à l'appareil, il s'agit de données d'étalonnage et/ou de données de paramétrage.

5. Dispositif selon la revendication 1,
**caractérisé en ce**
**que** le poste de supervision (2) transmet par l'intermédiaire de la ligne de transmission (6, 6.1, 6.2, 6.3) une commande, au moyen de laquelle la mise en service de l'appareil de terrain (3.1, 3.2, 3.3) est démarrée.
